# EUROPEAN PATENT APPLICATION

(11) **EP 3 673 863 A1**
(43) Date of publication of application: **01.07.2020**
(21) Application number: 18306868.3
(22) Date of filing: 28.12.2018
(51) Int. Cl.: A61C 7/00, A61C 13/00

(54) **3D PRINTING OPTIMIZATION USING CLINICAL INDICATIONS**

(71) Applicant: Trophy, 77435 Marne La Vallée Cedex 2 (FR)
(72) Inventor: NARCISSE, Pascal, 77435 MARNE LA VALLEE CEDEX 2 (FR); REYNARD, Delphine, 77435 MARNE LA VALLEE CEDEX 2 (FR); RIPOCHE, Xavier, 77435 MARNE LA VALLEE CEDEX 2 (FR); JACOB, Jean-Pascal, 77435 MARNE LA VALLEE CEDEX 2 (FR); CAPRON-RICHARD, Sabrina, 77435 MARNE LA VALLEE CEDEX 2 (FR)
(74) Representative: Santarelli

(57) **Abstract**

A method for forming a model of dentition for a patient obtains a 3D surface contour image of the patient dentition and segments the 3D surface contour image. Design parameters of a dental appliance for the patient dentition are obtained and a region of interest of the segmented 3D surface contour image identified according to the dental appliance. The model including the region of interest is generated, excluding one or more portions of the segmented 3D image.

## Description

### TECHNICAL FIELD

The disclosure relates generally to dental imaging and more particularly relates to methods and apparatus for identifying and printing portions of the patient model of most interest according to clinical requirements.

### BACKGROUND

Optical intraoral scans produce contours of dentition objects and have been helpful in improving visualization of teeth, gums, and other intra-oral structures. Surface contour information can be particularly useful for assessment of tooth condition and has recognized value for various types of dental procedures, such as for restorative dentistry. This can provide a valuable tool to assist the dental practitioner in identifying various problems and in validating other measurements and observations related to the patient's teeth and supporting structures. Surface contour information can also be used to generate 3D models of dentition components such as individual teeth; the position and orientation information related to individual teeth can then be used in assessing orthodontic treatment progress.

For orthodontic and other restorative procedures, a model of patient dentition is generated, initially and at various stages of the process. A number of standardized metrics can then be applied to the models for comparison and to track overall progress of the treatment regimen. Another function of the model relates to the design and fabrication of dental appliances that support the orthodontic procedure, including devices such as retainers, aligners, expanders, positioners, spacers, and the like.

3D printing is a promising technology for a number of tasks related to restorative dentistry and orthodontics. With the development of low-cost printing equipment and improvements in materials and performance, 3D printing can allow the practitioner to prepare models and some types of appliances in-house, reducing delay and expense.

One drawback with 3D printing relates to the amount of time that can be required for preparation and printing of the complete model for a patient's dentition. It can be appreciated that there would be benefits to techniques that would help to reduce the printing burden by printing only those parts of the model that are essential and still provide the needed basis for appliance design and fitting. It would be desirable to provide this capability without requiring the practitioner to manually operate or program the 3D printing system equipment.

### SUMMARY

An object of the present disclosure is to address the need for reducing the delay time for 3D printing of dentition models.

These objects are given only by way of illustrative example, and such objects may be exemplary of one or more embodiments of the invention. Other desirable objectives and advantages inherently achieved by the disclosed methods may occur or become apparent to those skilled in the art. The invention is defined by the appended claims.

According to one aspect of the disclosure, there is provided a method for forming a model of dentition for a patient, the method executed in part by a computer and comprising:
a) obtaining a 3D mesh representative of the surface contour image of the patient dentition;
b) segmenting the 3D mesh;
c) obtaining design parameters of a dental appliance for the patient dentition;
d) identifying a region of interest of the segmented 3D mesh based on the dental appliance; and
e) generating the model including the region of interest and excluding at least one portion of the segmented 3D image.

According to an alternate embodiment of the present disclosure, there is provided a computer processor programmed with stored instructions that configure the processor to generate print file data for forming a model of dentition for a patient, the stored instructions comprising:
a) instructions that configure the processor for obtaining a 3D mesh representative of the surface contour image of the patient dentition;
b) instructions for segmenting the 3D mesh image;
c) instructions for obtaining design parameters of a dental appliance for the patient dentition;
d) instructions for identifying a region of interest of the segmented 3D mesh according to the dental appliance; and
e) instructions for generating the model including the region of interest and excluding at least one portion of the segmented 3D mesh.

### BRIEF DESCRIPTION OF THE DRAWINGS

The foregoing and other objects, features, and advantages of the invention will be apparent from the following more particular description of the embodiments of the invention, as illustrated in the accompanying drawings.

The elements of the drawings are not necessarily to scale relative to each other.
FIG. 1 is a schematic diagram that shows a surface contour imaging apparatus for obtaining a 3D view from a succession of reflectance images according to an embodiment of the present disclosure.
FIG. 2 is a schematic diagram showing an imaging apparatus that can operate as a video camera for polychromatic reflectance image data capture as well as a scanner for executing related projecting and imaging functions.
FIGs. 3 and 4 show point cloud images generated from a succession of structured light images.
FIG. 5 is a schematic diagram showing major components of a system for dental 3D printing according to an embodiment of the present disclosure.
FIG. 6 is a logic flow diagram that shows a sequence for dental 3D printing according to an embodiment of the present disclosure.
FIG. 7 is a logic flow diagram that shows a sequence for region of interest (ROI) identification.
FIG. 8 is a logic flow diagram that expands upon particular steps of the FIG. 7 process that remove portions of the volume image content from the model that is generated.
FIG. 9 shows exemplary use of cutting planes orthogonal to the dental arch for clipping the tooth range.
FIG. 10 lists exemplary specifications that can be used as resource information to determine features of the partial model that are typically needed for various types of appliance.
FIG. 11 is a logic flow diagram that shows a sequence for model processing that uses the ROI obtained from the process of FIG. 7 to generate print data for forming the partial model on the 3D printer.
FIG. 12 shows a full dental arch with the teeth segmented.
FIGs. 13 and 14 show identification of point distance and show definition of a margin that includes points sufficiently close to the teeth.
FIG. 15 shows definition of a lingual limit and a buccal limit for a given ROI.
FIG. 16 shows a defined 3D partial model for the exemplary ROI definition sequence shown in FIGs. 12-15.
FIG. 17 is a logic flow diagram showing steps for defining and forming a support base and for generating an appropriate model using the defined base.
FIGs. 18 and 19 show different versions of a model of different heights having a base.
FIG. 20 shows a scaling step for the model.
FIGs. 21-25 show how various clip features are prepared.
FIG. 26 shows forming a filled model.
FIG. 27 shows a hollow model.
FIG. 28 shows a model having drain features.

### DETAILED DESCRIPTION OF THE EMBODIMENTS

The following is a detailed description of the preferred embodiments, reference being made to the drawings in which the same reference numerals identify the same elements of structure in each of the several figures.

Where they are used in the context of the present disclosure, the terms "first", "second", and so on, do not necessarily denote any ordinal, sequential, or priority relation, but are simply used to more clearly distinguish one step, element, or set of elements from another, unless specified otherwise.

As used herein, the term "energizable" relates to a device or set of components that perform an indicated function upon receiving power and, optionally, upon receiving an enabling signal.

In the context of the present disclosure, the terms "viewer", "operator", and "user" are considered to be equivalent and refer to the viewing practitioner, technician, or other person who views and manipulates an image, such as a dental image, on a display monitor. An "operator instruction" or "viewer instruction" is obtained from explicit commands entered by the viewer, such as by clicking a button on a camera or by using a computer mouse or by touch screen or keyboard entry.

In the context of the present disclosure, the phrase "in signal communication" indicates that two or more devices and/or components are capable of communicating with each other via signals that travel over some type of signal path. Signal communication may be wired or wireless. The signals may be communication, power, data, or energy signals. The signal paths may include physical, electrical, magnetic, electromagnetic, optical, wired, and/or wireless connections between the first device and/or component and second device and/or component. The signal paths may also include additional devices and/or components between the first device and/or component and second device and/or component.

In the context of the present disclosure, "image acquisition" refers to image capture using a 2D or 3D intraoral scanner or to acquisition of image data for the patient dentition, such as from a scan of an impression or mold by a cone beam computed tomography (CBCT) apparatus.

In the image processing context of the present disclosure, "rendering" is the active process of generating and forming an image for display and generating the pattern of signals needed for displaying it to a user. Image data content that is used for rendering can be transformed from a 2D or 3D model (or models), typically stored as scene content in some type of scene file, into suitable patterns of light energy that are emitted from a display screen. A scene file contains objects in a strictly defined language or data structure, describing aspects of the image content such as geometry, viewpoint, texture, lighting, and shading information as a description of a scene. The data contained in the scene content or scene file is passed to a rendering program to be processed and output or streamed to a display driver or graphics processing unit (GPU) for direct presentation on a display or to a digital image or raster graphics image file. The digital image data file can alternately be available for presentation on a display. In general, the term "rendering" provides a transformation that can be considered as analogous to an "artist's rendering" of a scene; different artists working in different media can generate different renderings of the same scene content. The same image content can be rendered, for example, on a monochrome display or in color on a full color display.

The term "subject" refers to the patient dentition that is being imaged and, in optical terms, can be considered equivalent to the "object" of the corresponding imaging system.

The term "set", as used herein, refers to a non-empty set, as the concept of a collection of elements or members of a set is widely understood in elementary mathematics. The terms "subset" or "partial subset", unless otherwise explicitly stated, are used herein to refer to a non-empty proper subset, that is, to a subset of the larger set, having one or more members. For a set S, a subset may comprise the complete set S. A "proper subset" of set S, however, is strictly contained in set S and excludes at least one member of set S. A "partition of a set" is a grouping of the set's elements into non-empty subsets so that every element is included in one and only one of the subsets. Two sets are "disjoint" when they have no element in common.

In the context of the present disclosure, the general phrase "dental appliance" can refer to any of a number of types of temporary or permanent devices installed in the patient's mouth, including devices installed as a part of an orthodontic or restorative treatment, such as alignment devices; partial appliances; various types of retainers; retainer wires, contention wires; Nance/lingual arch device; spring retainers; expanders; restorations including crowns, implants, onlays, and the like; and surgical guides, for example.

In the context of the present disclosure, a model of the patient's dentition generally is formed as a 3D representation of the upper or lower jaw of the patient. A "partial model" omits some portion of the dentition and jaw structure for the corresponding acquired model, such as omitting at least one tooth or tooth position. For example, a partial model as formed herein can present only the teeth in the forward portion of the jaw or only one, two, or three adjacent teeth as a region of interest (ROI), using procedures given in more detail subsequently.

Mesh representation can be provided using 3D volume radiographic methods such as CBCT, using structured light imaging methods and an intraoral camera, or using a 3D imaging apparatus.

CBCT apparatus can be used for acquiring 3D volume content for a model of patient dentition. As is well known to those skilled in the imaging arts, the CBCT apparatus rotates an x-ray source and a detector about the subject and acquires a set having a series of radiographic 2D projection images at different angles about the subject. Reconstruction processes are then used to form a reconstructed 3D volume image of the subject using the set of 2D projection images. Reference is hereby made to commonly assigned US Patent No. 8670521 entitled "Method for Generating an Intraoral Volume Image" to Bothorel et al. for more detailed information on how the CBCT apparatus operates. For forming a model according to an embodiment of the present disclosure, the CBCT apparatus is typically employed to scan a mold or imprint of patient dentition. CBCT data from a scan of the patient can alternately be used, if available.

CBCT imaging apparatus and the imaging algorithms used to obtain 3D volume images using such systems are well known in the diagnostic imaging art and are, therefore, not described in detail in the present application. Some exemplary algorithms and approaches for forming 3D volume images from the 2D projection images that are obtained in operation of the CBCT imaging apparatus can be found, for example, in the teachings of U.S. Patent No. 5,999,587 entitled "Method of and System for Cone-Beam Tomography Reconstruction" to Ning et al. and of U.S. Patent No. 5,270,926 entitled "Method and Apparatus for Reconstructing a Three-Dimensional Computerized Tomography (CT) Image of an Object from Incomplete Cone Beam Data" to Tam.

In typical applications, a computer or other type of dedicated logic processor act as control logic processor for obtaining, processing, and storing image data is part of the CBCT system, along with one or more displays for viewing image results. As noted previously, the acquired 3D volume from the CBCT system can be used for generating a model of patient dentition as a mesh or point cloud, as described in more detail subsequently.

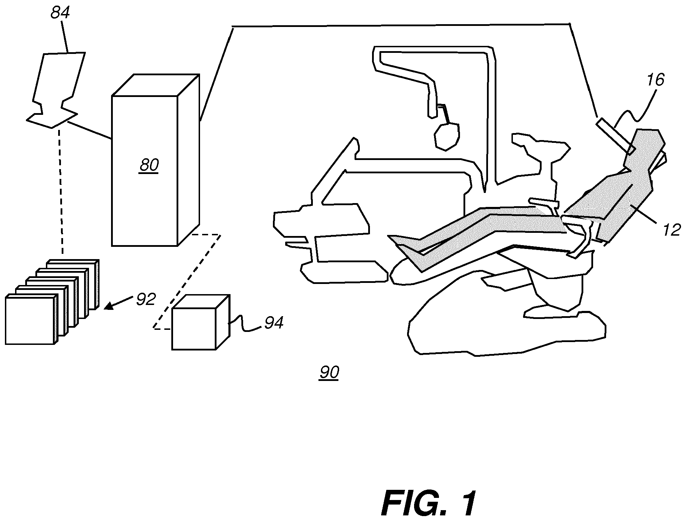

The schematic diagram of FIG. 1 shows a surface contour imaging apparatus 90 that can be used for obtaining 3D content for model generation from a succession of reflectance images according to an embodiment of the present disclosure. A camera 16, typically a hand-held digital camera, a color depth camera, handheld 3D scanner, or intra-oral 3D scanner, is scanned through the mouth of patient 12 for acquiring a set having multiple reflectance images and associated depth information. A control logic processor 80, in signal communication with camera 16, obtains image data from camera 16 and processes this image data along with depth information in order to generate individual 3D views 92. Control logic processor 80 then combines the scanned 3D views in order to generate, store, and optionally render on a display 84, a composite 3D model surface 94. Error detection and correction logic on control logic processor 80 can then operate to identify mis-matched or poorly matched 3D views 92 and to generate and display a corrected composite 3D surface 94.

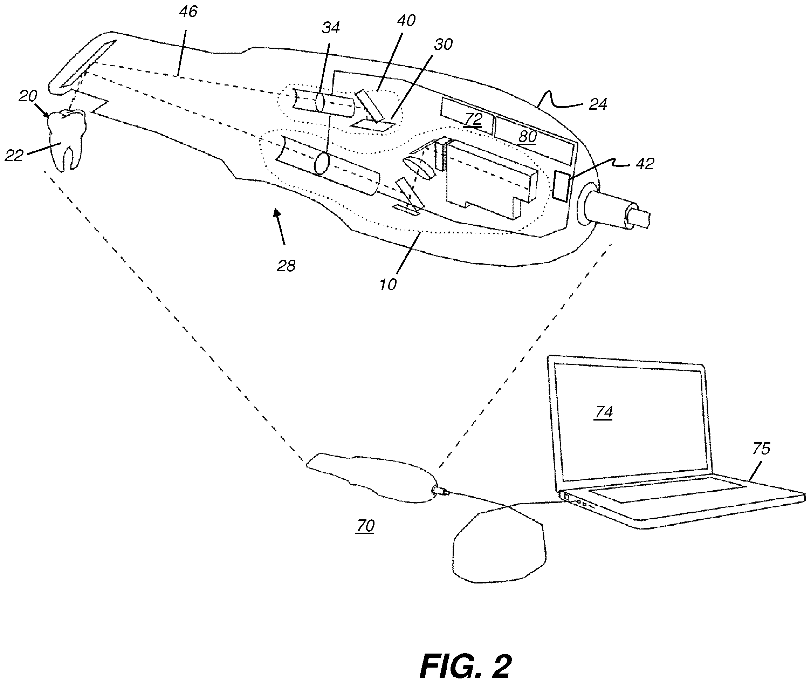

FIG. 2 is a schematic diagram showing an imaging apparatus 70 that can operate as a video camera 24 for polychromatic reflectance image data capture as well as a scanner 28 for executing related projecting and imaging functions used to characterize surface contour with structured light patterns 46. A handheld imaging apparatus 70 uses a video camera 24 for image acquisition for both contour scanning and image capture functions according to an embodiment of the present disclosure. Control logic processor 80, or other type of computer that may be part of camera 24, controls the operation of an illumination array 10 that generates the structured light and directs the light toward a surface position and controls operation of an imaging sensor array 30. Image data from surface 20, such as from a tooth 22, is obtained from imaging sensor array 30 and stored as video image data in a memory 72. Imaging sensor array 30 is part of a sensing apparatus 40 that includes an objective lens 34 and associated elements for acquiring video image content. Control logic processor 80, in signal communication with camera 24 components that acquire the image, processes the received image data and stores the mapping in memory 72. The resulting image from memory 72 is then optionally rendered and displayed on a display 74, which may be part of another computer 75 used for some portion of the processing described herein. Memory 72 may also include a display buffer. One or more sensors 42, such as a motion sensor, can also be provided as part of scanner 28 circuitry.

In structured light imaging, a pattern of lines or other shapes is projected from illumination array 10 toward the surface of an object from a given angle. The projected pattern from the illuminated surface position is then viewed from another angle as a contour image, taking advantage of triangulation in order to analyze surface information based on the appearance of contour lines. Phase shifting, in which the projected pattern is incrementally shifted spatially for obtaining additional measurements at the new locations, is typically applied as part of structured light imaging, used in order to complete the contour mapping of the surface and to increase overall resolution in the contour image. By way of example and not limitation, use of structured light patterns for surface contour characterization is described in commonly assigned U.S. Patent Application Publications No. US2013/0120532 and No. US2013/0120533, both entitled "3D INTRAORAL MEASUREMENTS USING OPTICAL MULTILINE METHOD" and incorporated herein in their entirety.

### Mesh/point cloud generation

By knowing the instantaneous position of the camera and the instantaneous position of the line of light within an object-relative coordinate system when the image was acquired, a computer and software can use triangulation methods to compute the coordinates of numerous illuminated surface points relative to a plane. As the plane is moved to intersect eventually with some or all of the surface of the object, the coordinates of an increasing number of points are accumulated. As a result of this image acquisition, a point cloud of vertex points or vertices can be identified and used to represent the extent of a surface within a volume. The points in the point cloud then represent actual, measured points on the three-dimensional surface of an object. A mesh can then be constructed, connecting points on the point cloud as vertices that define individual congruent polygonal faces (typically triangular faces) that characterize the surface shape. The full 3D image model can then be formed by combining the surface contour information provided by the mesh with polychromatic image content obtained from a camera, such as camera 24 of FIG. 2.

Polychromatic image content can be provided in a number of ways, including the use of a single monochrome imaging sensor with a succession of images obtained using illumination of different primary colors, one color at a time, for example. Alternately, a color imaging sensor could be used.

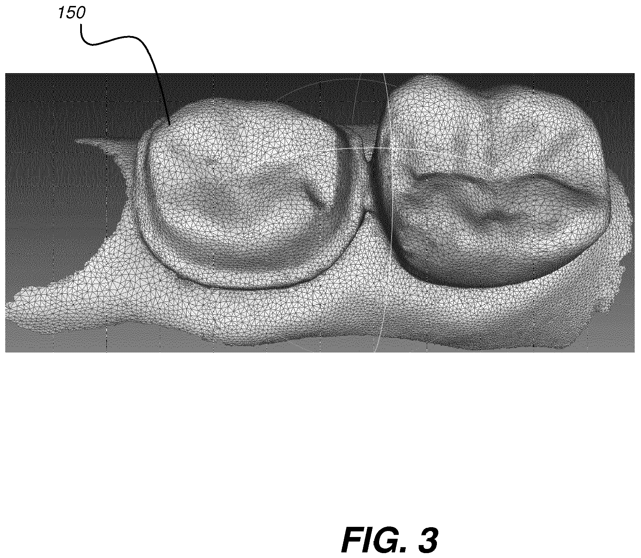

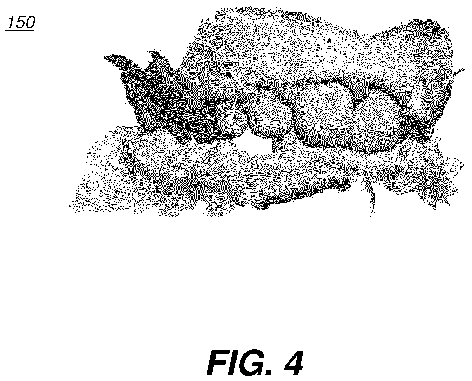

Image processing at control logic processor 80 can generate a contour surface model using line scan data from structured light imaging, or using point cloud or mesh data or CBCT volume image data. By way of example, FIGs. 3 and 4 show a point cloud or mesh 150 generated from a succession of structured light images. Further processing of the point cloud content can be used to generate a mesh as an alternative contour surface model.

It should be noted that other types of reflectance imaging can be used for obtaining intraoral surface contour data. Surface contour information can be obtained using time-of-flight imaging or range imaging methods, such as structure-from-motion processing, for example.

### Workflow for 3D printing optimization

The 3D printing workflow of the present disclosure addresses the problem of using 3D printing more efficiently based on clinical indications for the patient. Clinical indications include factors such as type and stage of treatment being followed and design footprint (dimensions and geometry) of the appliance that is prescribed by the practitioner. For example, a clinical indication for a patient can include treatment using a partial retainer for a specific set of teeth or portion of the jaw. Where clinical indications show that the complete model for a patient may not be necessary for forming and fitting a particular appliance, an embodiment of the present disclosure can use these clinical indications to appropriately condition the data for printing. This conditioning of the 3D data can include truncation, bypassing or ignoring portions of the model that are not of interest for installing and using a particular appliance while forming a partial model that is sufficient for use in preparing the prescribed appliance.

The clinical indications include design parameters that describe which teeth are spanned, such as covered or contacted, by an appliance or give other details on which portion of the mouth constitutes the ROI and is needed for the model. According to an embodiment of the present disclosure, these design parameters are accessed by control logic in order to assemble the information provided for forming the model and sending the model data to a 3D printer for model generation.

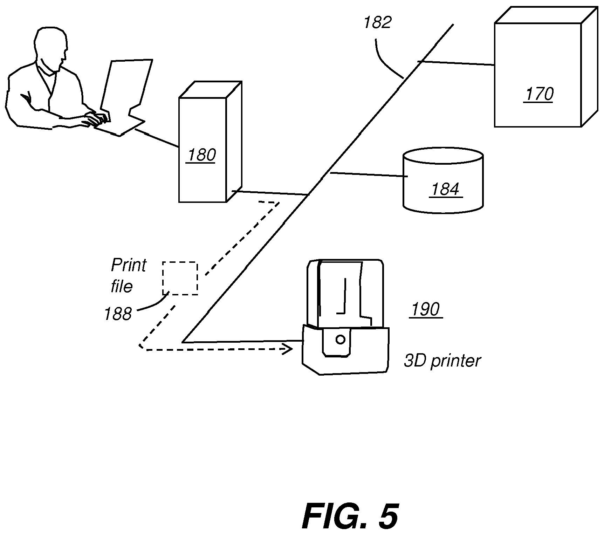

The simplified schematic of FIG. 5 shows major components of a system for dental 3D printing according to an embodiment of the present disclosure. The patient images that provide the content for the 3D model are from an imaging system 170 that can be, for example, a CBCT imaging apparatus that scans a mold or imprint or the intraocular camera 16 of FIG. 1. A wired or wireless network 182, such as the internet can be used to transfer this 3D image data to a memory 184 or storage on a networked server or workstation 180. Clinical indications and related parameters for the patient can be entered or otherwise associated with the 3D data through workstation 180. Workstation 180 can form a processor that is programmed with stored instructions that configure the processor for obtaining a 3D mesh of the patient dentition; for segmenting the 3D mesh; for obtaining design parameters of a dental appliance for the patient dentition; for identifying a region of interest of the segmented 3D mesh based on the dental appliance; and for generating the model including the region of interest and excluding at least one portion of the segmented 3D mesh by forming a print file 188 or other ordered arrangement of print data in order to provide the needed information for printing the model, or appropriate portions of the model. The print file 188 is then used to drive a 3D printer 190 for forming the partial model.

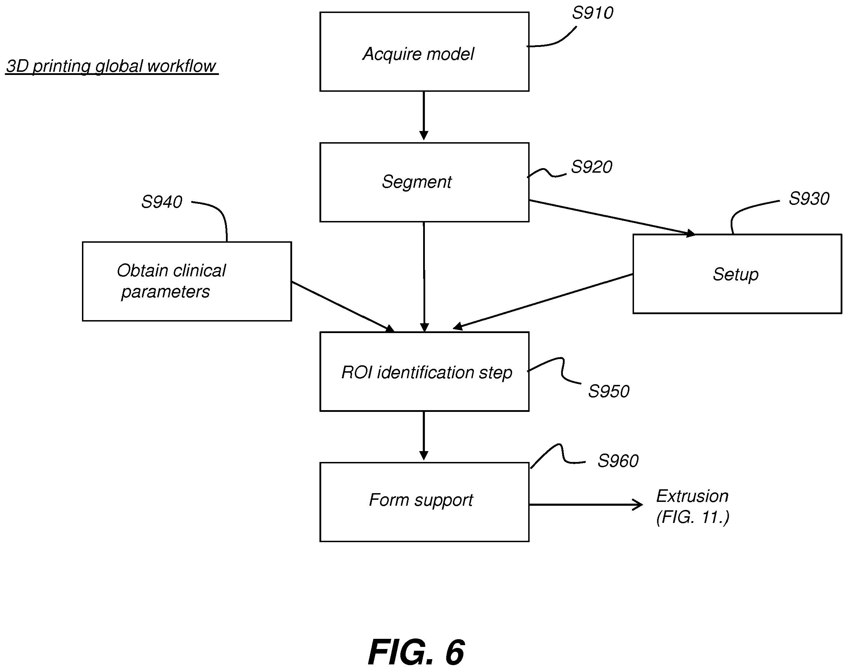

The logic flow diagram of FIG. 6 shows a sequence for dental 3D printing according to an embodiment of the present disclosure. In an acquisition step S910, the 3D image data for forming the mouth or jaw model is acquired from the imaging apparatus or from memory, as described previously with respect to FIG. 5. A segmentation step S920 provides segmentation and labeling of the model data, using segmentation techniques familiar to those skilled in the volume imaging arts.

Various approaches for addressing the segmentation problem for mesh images have been proposed, such as the following:
(i) A method described in the article "Snake-Based Segmentation of Teeth from Virtual Dental Casts" by Thomas Kronfeld et al. (in Computer-Aided Design & applications, 7(a), 2010) employs an active contour segmentation method that attempts to separate every tooth and gum surface in a single processing iteration. The approach that is described, however, is not a topology-independent method and can fail, particularly where there are missing teeth in the jaw mesh.
(ii) An article entitled "Perception-based 3D Triangle Mesh Segmentation Using Fast Marching Watershed" by Page, D.L. et al. (in Proc. CVPI vol. II 2003) describes using a Fast Marching Watershed method for mesh segmentation. The Fast Marching Watershed method that is described requires the user to manually enter seed points. The seed points must be placed at both sides of the contours of the regions under segmentation. The method then attempts to segment all regions in one step, using seed information. For jaw mesh segmentation, this type of method segments each tooth as well as the gum at the same time. This makes the method less desirable, because segmenting teeth from the gum region typically requires parameters and processing that differ from those needed for the task of segmenting teeth from each other. Using different segmentation strategies for different types of dentition components with alternate segmentation requirements would provide better performance.
(iii) For support of his thesis, "Evaluation of software developed for automated segmentation of digital dental models", M.J. Moon used a software tool that decomposed the segmentation process into two steps: separation of teeth from gingival structure and segmentation of whole arch structure into individual tooth objects. The software tool used in Moon's thesis finds maximum curvature in the mesh and requires the user to manually choose a curvature threshold to obtain margin vertices that are used for segmenting the tooth. The software also requires the user to manually edit margins in order to remove erroneous segmentation results. Directed to analysis of shape and positional characteristics, this software tool does not consider employing color information in the separation of teeth regions from the gum regions.
(iv) U.S. Patent application 20030039389 A1 entitled "Manipulation a digital dentition model to form models of individual dentition components" by Jones, T. N. *et al.* disclose a method of separating portions of the dentition model representing the adjacent teeth.

Segmentation and associated labeling can be fully automated or can require some amount of user interaction. Reference is hereby made to commonly assigned U.S. Patent Application Publication No. 2017/0076443 entitled "Method and System for hybrid mesh segmentation" by Ye et al. and to application WO2018033762 entitled "Dynamic Dental Arch Map" by Lagardere et al.

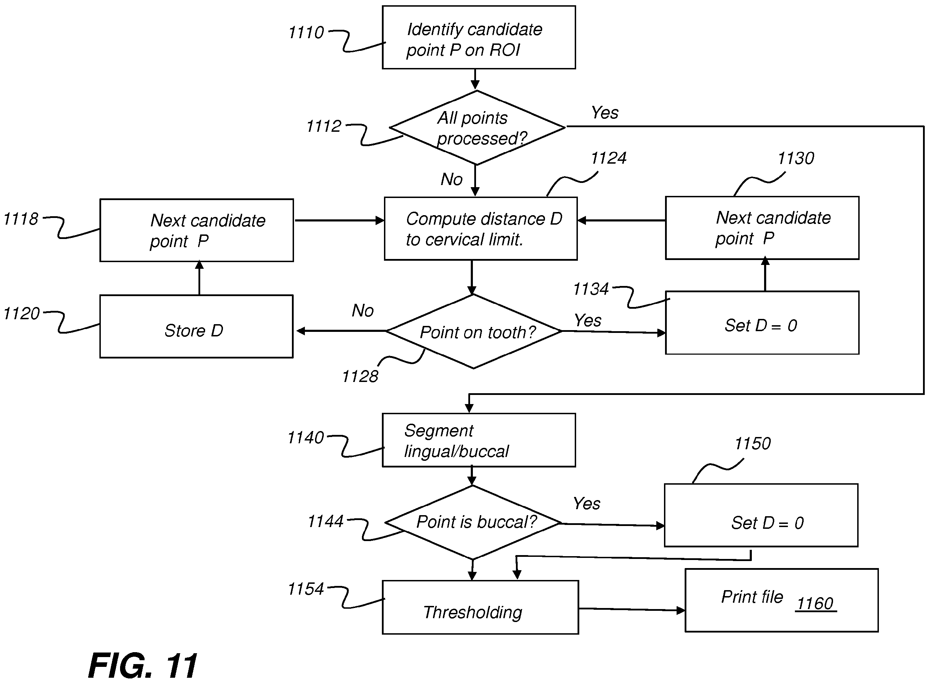

In a model setup step S930, a 3D image for the jaw or mouth, as needed, is generated using the acquired surface or volume data. This image data can then be processed in subsequent steps in order to identify a particular region of interest (ROI) for printing in final steps. A clinical parameters input step S940 obtains the needed information corresponding to clinical indications for the patient; these parameters are used for ROI identification in an ROI identification step S950. Parameters input step S940 also indicates the type of appliance that is required for a stage of patient treatment. A support forming step S960 adds any additional volume content that is useful according to the clinical indications. This can include a full or hollow base or other support or holder that has value when forming, fitting, handling, or displaying the appliance. The combined ROI and support data will be used to form a print file for the 3D printer with further processing in FIG. 11.

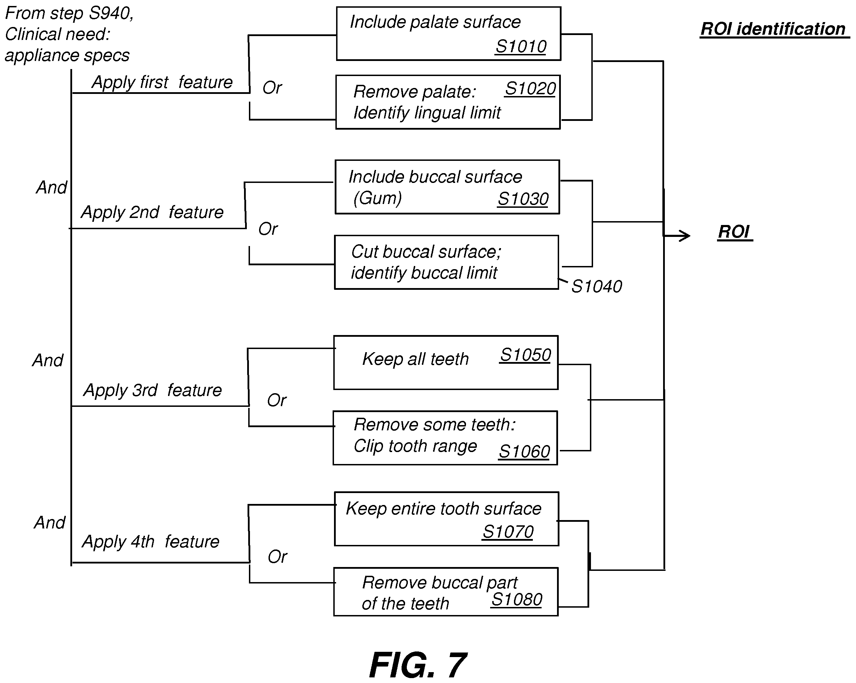

The logic flow diagram of FIG. 7 shows a sequence for executing ROI identification step S950 from the FIG. 6 process. Input to the process of step S950 are appliance specifications and other clinical need data from step S940. The sequence for ROI identification can use various types of resource information, depending on the appliance specifications and on applied features. Applied features can include features such as cervical limit, tooth number, shape, and other detected features useful in determining the ROI for 3D printing.

By way of example, FIG. 7 shows the sequence for applying a set of features for ROI detection in step S950 of FIG. 6.

For application of a first tooth feature, the ROI identification can be provided to include the palate in a palate surface inclusion step S1010 or to remove the palate and include the lingual limit in a palate removal step S1020.

For application of a second tooth feature, ROI identification can further include the buccal surface in a buccal surface inclusion step S1030 or eliminate the buccal surface and identify the buccal limit in a buccal surface removal step S1040.

For application of a third tooth feature, such as tooth number, ROI identification can keep all teeth in a full tooth set inclusion step S1050 or choose a range of teeth in a tooth range clipping step S1060. In step S1060, at least one sectioning plane can be cut through the 3D model for limiting the partial model.

For additional application of a fourth tooth feature, ROI identification can include the entire tooth surface in a keep entire tooth surface step S1070. Alternately, a buccal portion removal step S1080 can be executed to exclude buccal portions of the model in the ROI.

The result of the FIG. 7 process is an ROI definition that can be used to define the contour of the model and define the minimal portion of the tooth model that is needed for forming and checking the appliance for a patient.

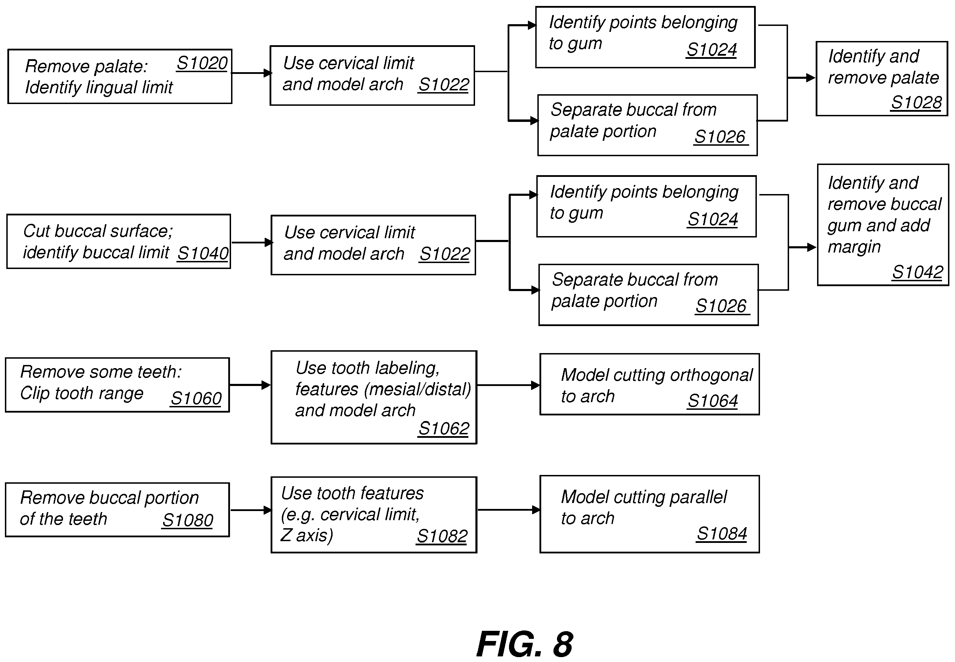

The logic flow diagram of FIG. 8 expands upon particular steps of the FIG. 7 process that remove portions of the volume image content from the model of the ROI that is generated. For palate removal step S1020, a cervical limit and arch use step S1022 obtains and applies cervical limit data from the model arch as particular features (exemplary first features in FIG. 7) to identify the lingual limit. A point identification step S1024, described in more detail in subsequent description of FIG. 11, identifies points on the 3D surface that represent gum tissue. A buccal separation step S1026 distinguishes buccal from palate surface portions of the model. A palate identification and removal step S1028 can then remove palate portions accordingly.

A similar sequence of steps in FIG. 8 show how buccal surface removal step S1040 can operate, applying cervical limit and model arch data as features (exemplary second features in FIG. 7). Again, cervical limit and arch use step S1022 obtains and uses cervical limit data from the model arch to identify the lingual limit for the ROI. Point identification step S1024 identifies points on the 3D surface that represent gum tissue. Buccal separation step S1026 separates buccal from palate surface portions of the model. A cut buccal surface step S1042 then executes to remove buccal gum portions and add the necessary margin for the teeth.

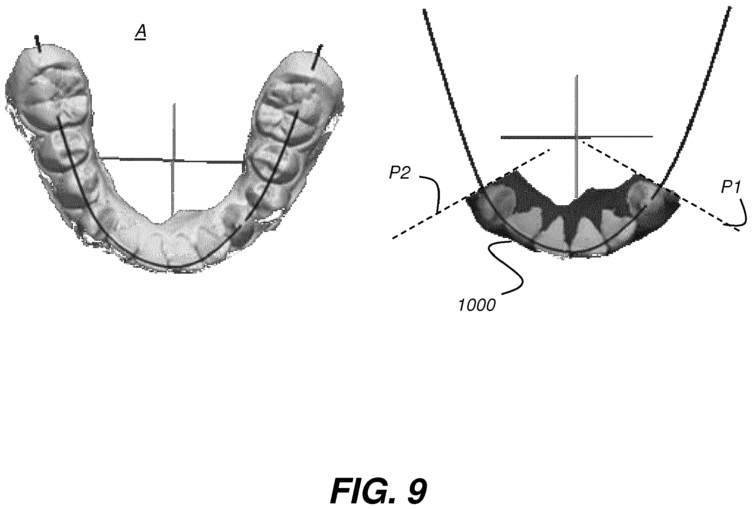

Tooth range clipping step S1060 in FIG. 8 can use tooth labeling, mesial/distal tooth surface identification, and other model arch data as features (exemplary third features in FIG. 7) in a features application step S1062. An orthogonal model cutting step S1064 can then use these features to determine where to terminate the model with a cutting plane that is orthogonal to the plane of the arch. According to an embodiment of the present disclosure, this processing selects the most distal tooth of the full model to keep as an ROI portion of the partial 3D model 1000 and cuts the arch A along an orthogonal plane PI, as shown for anterior teeth in the example of FIG. 9. Truncation can be behind the distal surface of a tooth. This processing can be performed on both right and left sides of the arch, identifying the furthest mesial tooth surface that is needed for the cutting plane along both sides and using cutting planes P1 and P2 as shown to define limits of the ROI orthogonal to the arch A.

Continuing with the FIG. 8 processing, buccal portion removal step S1080 can use various tooth features (exemplary fourth features in FIG. 7), including tooth cervical limit data and Z-axis information in a features application step S1082. A buccal truncation cutting step S1084 can then use these features to truncate buccal surfaces along the direction parallel to the arch. For step S 1084, each point P on the buccal portion of the tooth is considered. Points P that are not on the tooth and are equidistant from the cervical limit of the tooth can be used to define a cutting line for the ROI that extends generally in parallel to the arch.

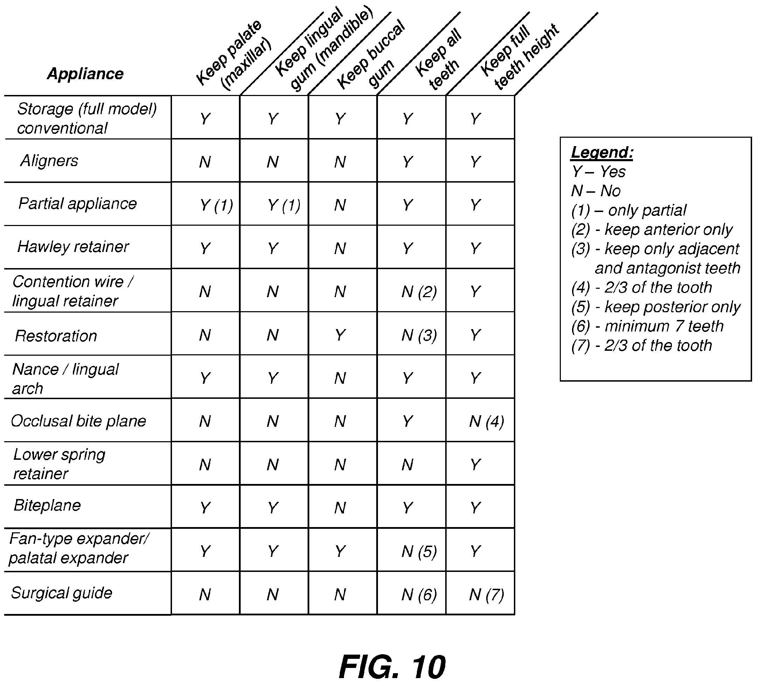

For each type of appliance specified according to clinical indications for the patient, the ROI and the requirements for components of the partial model can vary, including some features and excluding others. In some cases, at least one tooth can be excluded from the printed model portion. The chart shown in FIG. 10 lists exemplary specifications that can be used as resource information to determine features of the partial model that are typically needed for various types of appliance; various features can be excluded as shown in the FIG. 10 listing. For example, where an aligner is the required appliance, it may not be useful to include the palate and lingual or buccal gum features in the partial model; however, it is generally useful to include all teeth at full tooth height. As another example from the FIG. 10 chart, for conventional biteplane devices, buccal gum features can typically be excluded from the model. A contour of the partial model that includes the ROI can thus be determined according to data from design parameters. The contour can have at least one smooth portion or a flat bearing portion.

### Extrusion and Printing

The logic flow diagram of FIG. 11 shows a sequence for model processing that uses the ROI obtained from the process of FIG. 7 to generate print data for forming the partial model on the 3D printer. The FIG. 11 sequence forms the partial model that can then be used, along with support data described subsequently, for 3D printing according to an embodiment of the present disclosure.

In the FIG. 11 logic, each point P of the ROI is analyzed as a candidate for the model, in a loop that begins with the candidate point selection step 1110, and ends when a decision step S1112 determines that all candidate points of the ROI have been processed. For each candidate point P, a computation step S1124 computes the distance D between the point P and the nearest cervical limit. A decision step S1128 determines if the point P is on the tooth; if so, the value of distance D is set to zero (D = 0) in a value assignment step S1134. If the candidate point P is not on the tooth, a value assignment step S1120 stores the alternate value for point P. A next point selection step S1130 or S1118 executes, assigning a different point of the image surface as the next candidate point P for the test loop.

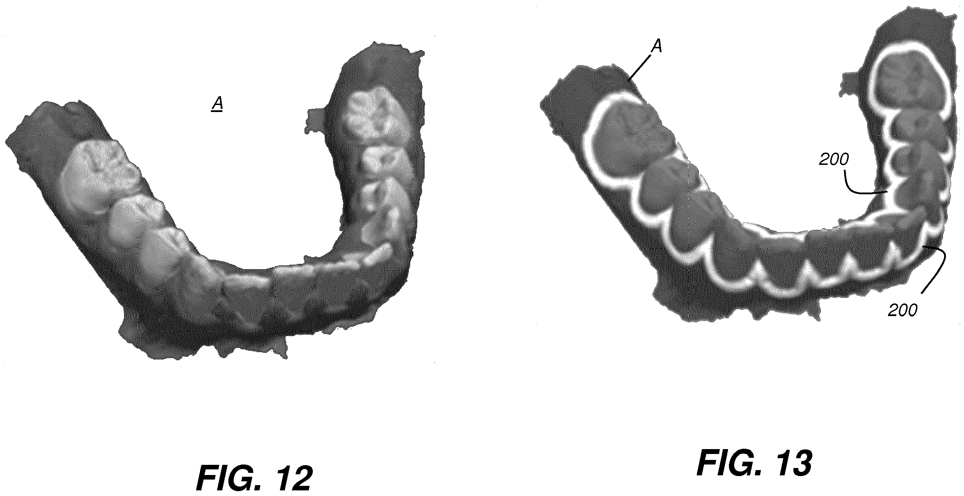

FIGs. 12 - 16 illustrate the basic processing of FIGs. 10 and 11 by way of an example case.

Following testing of all candidate points, a segmentation step S1140 executes, defining lingual and buccal elements. A parabola fitting the dental arch can be computed on the model to help distinguish buccal from lingual surfaces as part of the segmentation process. FIG. 12 shows a full dental arch with the teeth segmented.

A decision step S1144 assigns a value (such as 0 as shown) when a data element is on a buccal surface. A value assignment step S1150 assigns and stores a 0 value for known buccal surfaces. A thresholding step S1154 then applies a threshold operation on the model, such as comparing against a threshold value that indicates that a point is to be retained in the final contour surface. The threshold value can include information on whether or not the distance to teeth exceeds a lingual threshold or other value. Points having a sufficiently high distance value that exceeds the threshold form the extrusion file data that can be sent to the 3D printer as part of a 3D file preparation step S1160.

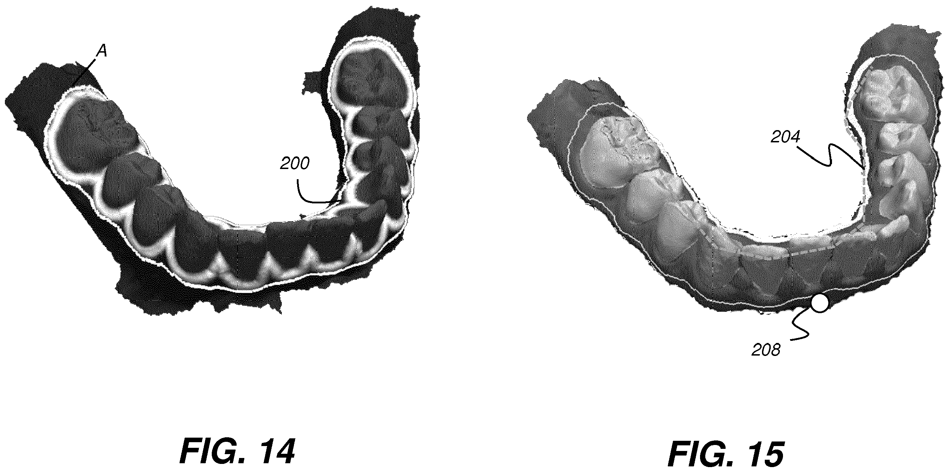

FIGs. 13 and 14 show identification of point distance and show definition of a margin 200 that includes points sufficiently close to the teeth. FIG. 14 shows expansion of margin 200 to a line nominally around 2mm from the teeth.

FIG. 15 shows definition of a lingual limit 204 and a buccal limit 208 for a given ROI.

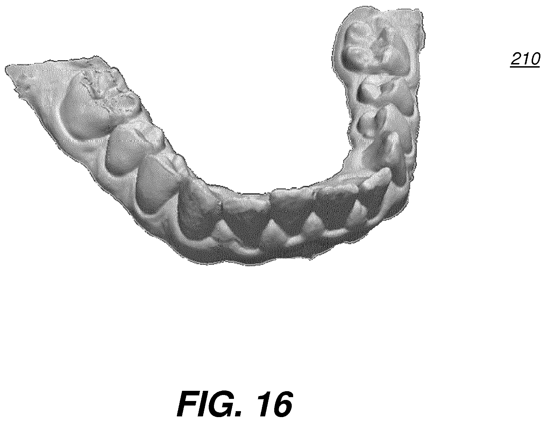

FIG. 16 shows a defined 3D partial model 210 for the exemplary ROI definition sequence shown in FIGs. 12-15.

### Support base generation

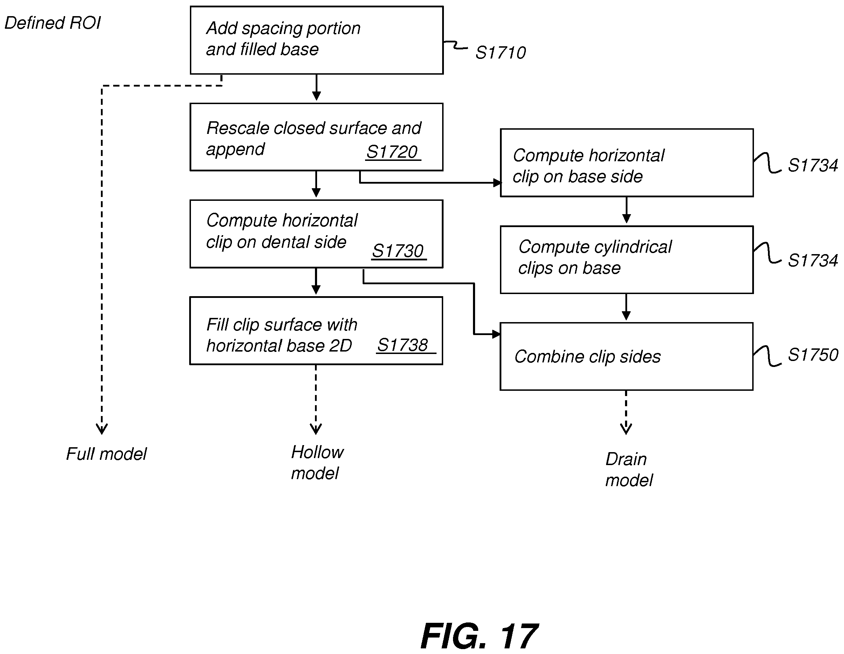

As was described with reference to support forming step S960 in the logic sequence of FIG. 9, some amount of supporting base or support structure can be added to the print file definition for printing the dental appliance. The sequence shown in the logic flow diagram of FIG. 17 gives exemplary steps for defining and forming a support base and for generating an appropriate model using the type of base needed.

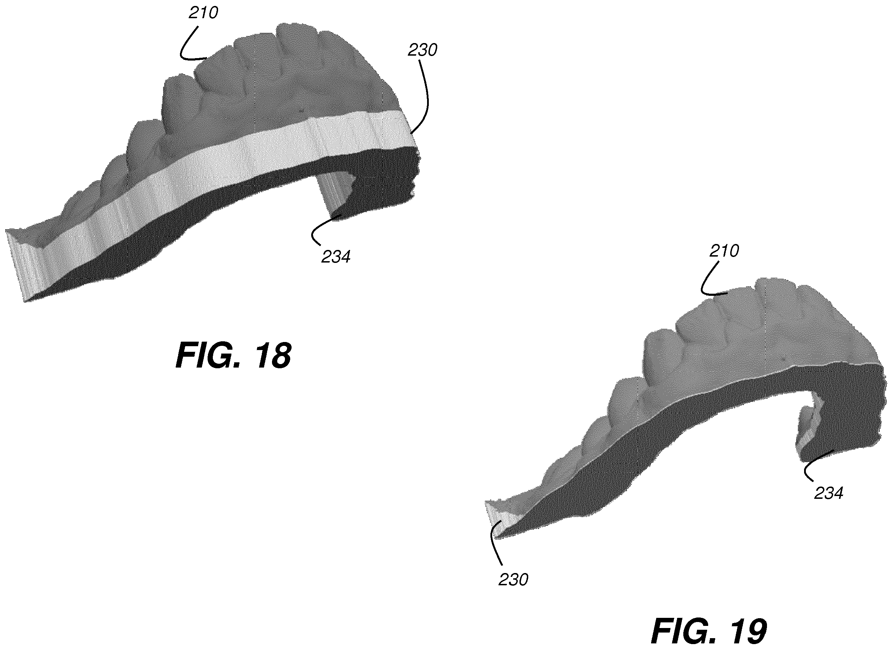

In an addition step S1710, a spacing portion 230 and a filled base 234 are added to the 3D partial model 210 shown in FIG. 16. FIGs. 18 and 19 show different versions of a model of different heights having an appended base 234. Base 234 is typically flat, but can have curvature.

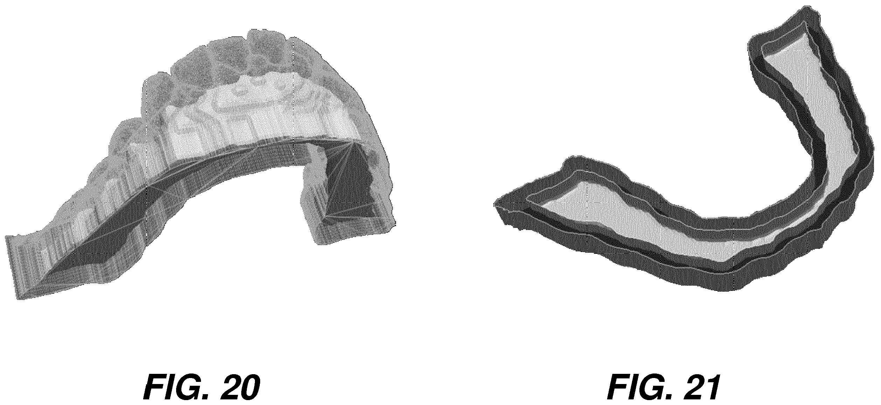

In a scaling step S1720, shown in the example of FIG. 20, internal portions of the support base are dilated or constricted (eroded) and joined together with closed surfaces. Dilation can be used for printing a surgical guide or for direct printing of an aligner, for example. Step S1720 helps to provide suitable thickness for the 3D printing process. FIG. 21 shows a view of the model with its original and scaled (eroded) surface.

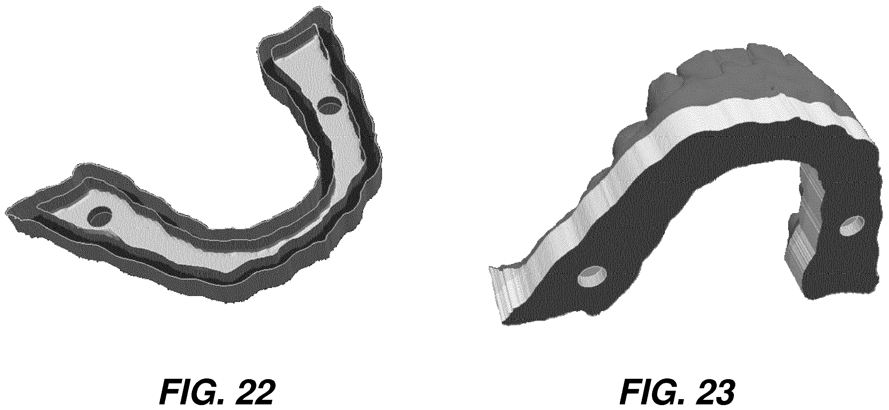

FIGs. 21-25 show how various clip features are prepared. FIG. 21 shows a horizontal clip on the base side. FIG. 22 shows cylindrical clips added to the base. FIG. 23 shows cylindrical clips from a base view.

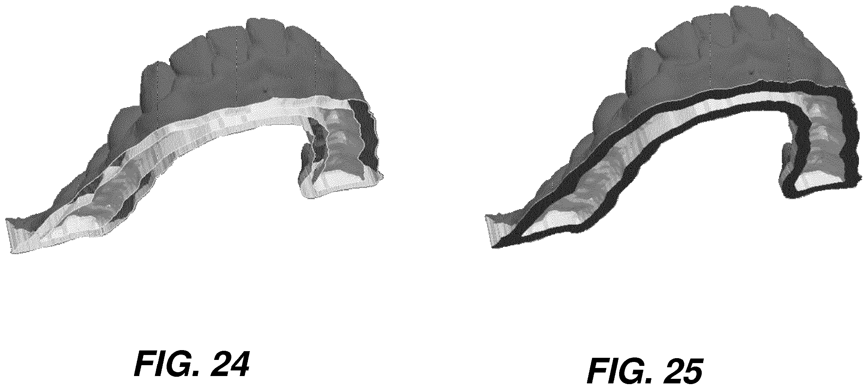

FIG. 24 shows a horizontal clip from the dental side. The model includes an eroded surface to support printing.

FIG. 25 shows a surface that joins the model surface and its eroded surface.

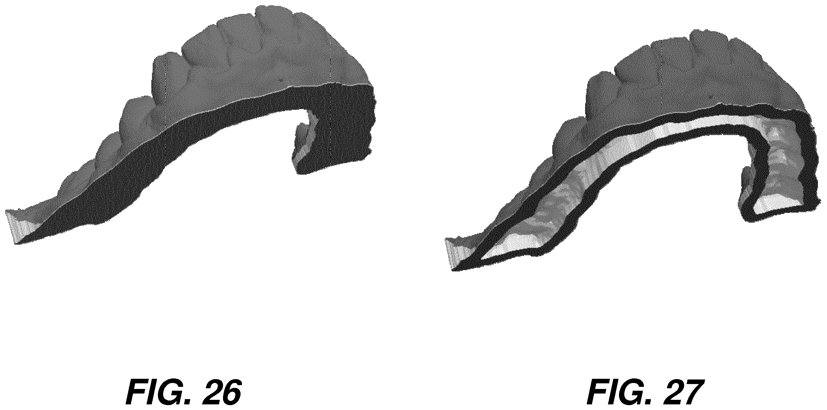

FIG. 26 shows forming a filled model. Clinical indications may also require or allow forming of a hollow model for the patient. FIG. 27 shows a hollow model.

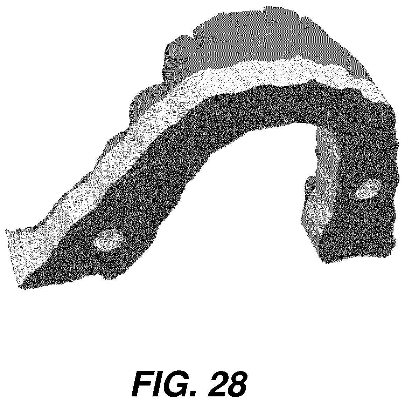

FIG. 28 shows a model having drain features.

An embodiment of the present disclosure is a computer or other logic processor that is programmed with instructions for executing the model truncation described herein in order to generate a print file or other logic structure or stream that can be used to form a partial model of patient dentition.

Consistent with one embodiment, the present invention utilizes a computer program with stored instructions that perform on image data accessed from an electronic memory. As can be appreciated by those skilled in the image processing arts, a computer program of an embodiment of the present invention can be utilized by a suitable, general-purpose computer system, such as a personal computer or workstation. However, many other types of computer systems can be used to execute the computer program of the present invention, including networked processors. The computer program for performing the method of the present invention may be stored in a computer readable storage medium. This medium may comprise, for example; magnetic storage media such as a magnetic disk such as a hard drive or removable device or magnetic tape; optical storage media such as an optical disc, optical tape, or machine readable bar code; solid state electronic storage devices such as random access memory (RAM), or read only memory (ROM); or any other physical device or medium employed to store a computer program. The computer program for performing the method of the present invention may also be stored on computer readable storage medium that is connected to the image processor by way of the internet or other communication medium. Those skilled in the art will readily recognize that the equivalent of such a computer program product may also be constructed in hardware.

It should be noted that the term "memory", equivalent to "computer-accessible memory" in the context of the present disclosure, can refer to any type of temporary or more enduring data storage workspace used for storing and operating upon image data and accessible to a computer system, including a database. The memory could be non-volatile, using, for example, a long-term storage medium such as magnetic or optical storage. Alternately, the memory could be of a more volatile nature, using an electronic circuit, such as random-access memory (RAM) that is used as a temporary buffer or workspace by a microprocessor or other control logic processor device. Displaying an image requires memory storage. Display data, for example, is typically stored in a temporary storage buffer that is directly associated with a display device and is periodically refreshed as needed in order to provide displayed data. This temporary storage buffer can also be considered to be a memory, as the term is used in the present disclosure. Memory is also used as the data workspace for executing and storing intermediate and final results of calculations and other processing. Computer-accessible memory can be volatile, non-volatile, or a hybrid combination of volatile and non-volatile types.

It will be understood that the computer program product of the present invention may make use of various image manipulation algorithms and processes that are well known. It will be further understood that the computer program product embodiment of the present invention may embody algorithms and processes not specifically shown or described herein that are useful for implementation. Such algorithms and processes may include conventional utilities that are within the ordinary skill of the image processing arts. Additional aspects of such algorithms and systems, and hardware and/or software for producing and otherwise processing the images or co-operating with the computer program product of the present invention, are not specifically shown or described herein and may be selected from such algorithms, systems, hardware, components and elements known in the art.

Exemplary embodiments according to the application can include various features described herein, individually or in combination.

While the invention has been illustrated with respect to one or more implementations, alterations and/or modifications can be made to the illustrated examples without departing from the spirit and scope of the appended claims. In addition, while a particular feature of the invention can have been disclosed with respect to one of several implementations, such feature can be combined with one or more other features of the other implementations as can be desired and advantageous for any given or particular function. The term "at least one of' is used to mean one or more of the listed items can be selected. The term "about" indicates that the value listed can be somewhat altered, as long as the alteration does not result in nonconformance of the process or structure to the illustrated embodiment. Finally, "exemplary" indicates the description is used as an example, rather than implying that it is an ideal. Other embodiments of the invention will be apparent to those skilled in the art from consideration of the specification and practice of the invention disclosed herein. It is intended that the specification and examples be considered as exemplary only, with a true scope and spirit of the invention being indicated by the following claims, and all changes that come within the meaning and range of equivalents thereof are intended to be embraced therein.

## Claims

1. A method for forming a model of dentition for a patient, the method executed in part by a computer and comprising:
a) obtaining a 3D mesh representative of a surface contour image of the patient dentition;
b) segmenting the 3D mesh;
c) obtaining design parameters of a dental appliance for the patient dentition;
d) identifying a region of interest of the segmented 3D mesh based on the dental appliance; and
e) generating the model including the region of interest and excluding at least one portion of the segmented 3D mesh.

2. The method of claim 1 wherein generating the model comprises forming the model using 3D printing.

3. The method of claim 1 wherein segmenting further comprises labeling teeth in the 3D mesh.

4. The method of claim 1 wherein excluding at least one portion of the segmented 3D mesh comprises excluding from the model at least one of at least one tooth, the palate, the lingual gum, or the buccal gum.

5. The method of claim 1 wherein the region of interest comprises at least one of a tooth, a tooth portion, a palate portion, a lingual gum portion, or a buccal gum portion.

6. The method of claim 1 further comprising fitting an arch of the patient dentition in the segmented 3D mesh.

7. The method of claim 1 further comprising determining a contour of the model according to the region of interest.

8. The method of claim 8 wherein the contour has at least one flat bearing portion.

9. The method of claim 1 further comprising appending a flat base to the model.

10. The method of claim 1 wherein the model is hollow.

11. The method of claim 1 wherein the appliance comprises one of an alignment device, a partial appliance, a retainer, a retainer wire, a contention wire, a Nance/lingual arch device, an expander, a restoration, a crown, an implant, an onlay, or a surgical guide.

12. The method of claim 1 wherein segmenting the 3D mesh further comprises one of distinguishing teeth from gum tissue, or distinguishing buccal surfaces from lingual surfaces.

13. The method of claim 1 wherein excluding at least one portion of the segmented 3D mesh comprises one of truncating the model orthogonally with respect to a dental arch and behind a distal surface of a tooth, or truncating the model in parallel to a curve fitting a dental arch wherein the truncation is along a line below a cervical limit of a tooth.

14. The method of claim 1 further providing forming at least one clip on the model.

15. The method of claim 1 wherein obtaining the 3D mesh comprises acquiring image data from one of an intraoral scanner, or CBCT.

16. A computer processor programmed with stored instructions that configure the processor to generate print file data for forming a model of dentition for a patient, the stored instructions comprising:
a) instructions that configure the processor for obtaining a 3D mesh representative of the surface contour image of the patient dentition;
b) instructions for segmenting the 3D mesh;
c) instructions for obtaining design parameters of a dental appliance for the patient dentition;
d) instructions for identifying a region of interest of the segmented 3D mesh based on the dental appliance; and
e) instructions for generating the model including the region of interest and excluding at least one portion of the segmented 3D mesh.
